# EUROPÄISCHE PATENTANMELDUNG

(11) **EP 1 308 239 A2**
(43) Veröffentlichungstag der Anmeldung: **07.05.2003**
(21) Anmeldenummer: 02024032.1
(22) Anmeldetag: 28.10.2002
(51) Int. Cl.: B23Q 17/22, B23Q 17/24, B23Q 1/54, B23Q 3/18

(54) **Werkzeugmaschine und Verfahren zur Justage der Spindelposition dieser Werkzeugmaschine**

(30) Priorität: 31.10.2001 DE 10153294
(71) Anmelder: GROB-Werke Burkhart Grob e.K., 87719 Mindelheim (DE)
(72) Erfinder: Lutz, Heinrich, 87742 Dirlewang (DE); Keim, Walter, 87719 Mindelheim (DE)
(74) Vertreter: Pfister, Stefan Helmut Ulrich

(57) **Zusammenfassung**

Die Erfindung betrifft eine Werkzeugmaschine einer oder zwei im Raum positionierbaren Spindel (5). Die Spindel ist über Stangen (21,22,23) auf verschiebbaren Schlitten (31,32,33) gelagert. Es ist eine Korrekturvorrichtung (6) vorgesehen, welche die tatsächliche Position der Spindel bezüglich eines oder mehrerer Referenzpunkte (69) bestimmt.

## Beschreibung

Die Erfindung betrifft eine Werkzeugmaschine mit mindestens einer oder mehreren im Raum positionierbaren Spindeln, wobei die Spindel über Stangen auf verschiebbaren Schlitten gelagert ist und die Verschiebung der Schlitten zu einer Positionierung der Spindel im Raum führt.

Vorgenannte Maschinen sind als Werkzeugmaschinen mit "Stabkinematik" bekannt. Der Vorteil solcher mit Stabkinematik ausgestatteter Werkzeugmaschinen gegenüber mit normalen Kreuzschlitten ausgestatteten Werkzeugmaschinen liegt in der einfachen Konstruktion der Maschinen mit Stabkinematik. Bei der Verwendung von Kreuzschlitten steigert sich der Aufwand pro Kreuzschlitten, da die erste Achse das Gewicht der nachfolgenden Achsen aufzunehmen hat. Hieraus resultieren entsprechend große, voluminöse Werkzeugmaschinen, die verhältnismäßig große Antriebe benötigen, um die großen Massen in akzeptierbarer Zeit zu beschleunigen. Im Gegensatz zu diesem Konzept wird bei den Werkzeugmaschinen mit Stabkinematik jede Stabanordnung im Prinzip gleich dimensioniert, da diese untereinander keine Lasten aufzunehmen haben. Hieraus resultiert ein entsprechend geringer Aufwand für die Realisierung der verschiedenen Freiheitsgrade, die Masse sinkt, wodurch auch der Antrieb einfacher dimensioniert werden kann, da mit leichteren Antrieben bei geringeren Massen die gleiche Beschleunigung erreicht werden kann.

Die Positionierung der Spindel erfolgt hierbei durch eine entsprechende Lage der Schlitten auf entsprechenden Führungen. Es kann sich nun aber ergeben, daß die Lage der Spindel zum Beispiel aufgrund Hitzeentwicklung in der Werkzeugspindel und/oder den Stangen, oder durch Fertigungstoleranzen beim Herstellen der Maschine, von der gewünschten Position abweicht.

Es ist Aufgabe der vorliegenden Erfindung, eine Werkzeugmaschine wie eingangs beschrieben dahingehend zu verbessern, daß die Werkzeugmaschine auch im Betrieb möglichst exakt arbeitet.

Zu der Lösung dieser Aufgabe geht die Erfindung von einer Werkzeugmaschine wie eingangs beschrieben aus und schlägt vor, daß eine Korrekturvorrichtung vorgesehen ist, welche die tatsächliche Position der Spindel bezüglich eines oder mehrerer Referenzpunkte oder bezüglich des Werkstückes bestimmt.

Durch den erfindungsgemäßen Vorschlag wird erreicht, daß unabhängig von der Lage der Schlitten auf deren Führungen die tatsächliche Position der Spindel ermittelt wird. Daraus wird abgeleitet, ob diese tatsächliche Position mit der gewünschten Position übereinstimmt oder nicht und ob dann entsprechende Korrekturen vorgenommen werden müssen oder nicht.

Die Erfindung geht nicht nur davon aus, daß die Korrekturvorrichtung die Position der Spindel bezüglich der Referenzpunkte bestimmt und sinngemäß korrigiert, letztendlich kommt es darauf an, daß die Spindel entsprechend dem Bearbeitungsprogramm richtig auf das Werkstück einwirkt und dieses bearbeitet. Es ist daher in einer Variante der Erfindung auch vorgesehen, daß die Korrekturvorrichtung auch bezüglich der Lage der Spindel zum Werkstück eingesetzt wird, hierfür bestehen ebenfalls mehrere Varianten. Zum einen ist es möglich, die Relativposition von Werkstück und Spindel zu bestimmen und entsprechende Korrekturen zu veranlassen. In einer anderen Variante ist es möglich, daß auch die Lage des Werkstückes bezüglich eines Referenzpunktes kontrolliert wird.

In einer bevorzugten Ausgestaltung der Erfindung ist vorgesehen, daß die tatsächliche Position der Spindel beziehungsweise des Werkstückes mit der gewünschten Position von der Korrekturvorrichtung und/oder einer Steuerung verglichen wird und dann auf die Lage des Schlittens oder der Schlitten derart eingewirkt wird, daß die gewünschte Position erreicht wird. Durch den Einsatz der Korrekturvorrichtung werden zum Beispiel mögliche Maßungenauigkeiten erkannt, die entsprechend korrigiert werden. Dabei beschränkt sich der Einsatzbereich einer solchen Anordnung nicht auf sogenannte stabkinematische Maschinen, sondern kann in analoger Weise auch bei herkömmlichen Maschinen eingesetzt werden, wo ein erster Schlitten die Führungsbahn des zweiten Schlittens (zum Beispiel bei der Kreuzführung) aufweist.

Die Anordnung der Referenzpunkte kann dabei beliebig erfolgen. Es ist zum Beispiel möglich, den Referenzpunkt in der Spindel beziehungsweise Spindelaufnahme selber zu definieren. Zum Beispiel ist es möglich, wenn die Korrekturvorrichtung über eine temperaturbedingte Längenänderung arbeitet und die Länge einer entsprechenden Dimension an der Spindel beziehungsweise Spindelaufnahme als Bezugspunkt beziehungsweise Referenzpunkt zu wählen. Der Begriff Referenzpunkt ist dabei nicht nur als feste geometrische Position, sondern als Bezugspunkt im Hinblick auf die Ermittlungen der entsprechenden Maßabweichung zu verstehen. Dies erfolgt zum Beispiel auch durch einen Vergleich der Solllänge mit der Istlänge, wie in dem vorgenannten Beispiel. Hierbei ist es günstig, wenn die Korrekturvorrichtung einen oder mehrere Temperatursensoren aufweist und die Korrekturvorrichtung die temperaturbedingte Längenänderung der Stange und/oder der Spindel bezüglich eines Referenzpunktes ermittelt.

Je nach Einsatzbereich ist es von Vorteil, eventuell einen oder auch mehrere Referenzpunkte vorzusehen. Für eine Positionierung der Spindel im Raum ist dabei die Bezugnahme auf mehrere Punkte günstig. Es kann sich ergeben, daß Maßungenauigkeiten nur im Hinblick auf eine Dimension bestehen, so daß auch die Verwendung eines Referenzpunktes in anderen Anwendungsfällen ausreichend ist.

Neben einer Korrekturvorrichtung, die auf Temperatursensoren aufbaut, ist es möglich, daß eine elektrische oder mechanische Meßanordnung vorgesehen ist und diese die entsprechenden Ist-Werte zur Verfügung stellt. Allgemein ist es von Vorteil, als Referenzmaßstab einen Glasstab oder andere Elemente einzusetzen, deren temperaturbedingte Längenänderung äußerst gering ist.

Alternativ zu einer elektrischen oder mechanischen Meßanordnung ist ebenfalls erfindungsgemäß vorgesehen, daß die Korrekturvorrichtung eine optische Meßanordnung aufweist. Eine optische Meßanordnung kann zum Beispiel durch ein Interferenzmuster gebildet sein. Es ist aber auch möglich zum Beispiel eine Laufzeitmessung zur Abstandsbestimmung einzusetzen. In diesem Fall ist es von Vorteil, wenn die Korrekturvorrichtung eine oder mehrere Laser aufweist.

Der Begriff "optische Meßanordnung" ist dabei nicht nur auf den sichtbaren Spektralbereich des elektromagnetischen Spektrums begrenzt, sondern umfaßt allgemein alle technisch einsetzbaren Wellenlängen. Von Vorteil sind dabei Meßanordnungen, die im infraroten oder ultravioletten Meßbereich arbeiten, da diese durch Umgebungslicht verhältnismäßig wenig gestört werden. Üblicherweise weisen optische Meßanordnungen dabei eine Sender-Empfänger-Anordnung auf, wobei Sender oder Empfänger auch als Referenzpunkte dienen können.

In einer bevorzugten Ausgestaltung der Erfindung ist vorgesehen, daß die Korrekturvorrichtung den Abstand der Spindel oder ein mit der Spindel verbundenes Element, zum Beispiel der Schlitten (welcher über Stangen die Spindel bewegt) oder die Tragplatte der Spindel, zu einem Referenzpunkt bestimmt. Längenänderungen, die sich zum Beispiel in der Verbindungsstange zwischen Schlitten und Spindel ergeben können, führen zu entsprechenden Maßungenauigkeiten in der Lage des Schlittens. Es ist daher günstig, die Korrekturvorrichtung so einzusetzen, daß die jeweilige Schlittenlage bestimmt wird.

Es ist alternativ aber auch von Vorteil, daß die Spindellage bestimmt wird. Hierbei ist zum Beispiel der Abstand zwischen der Spindel und dem Referenzpunkt von Interesse oder aber der Abstand eines mit der Spindel verbundenen Elementes, zum Beispiel die Tragplatte der Spindel, zu dem Referenzpunkt interessant.

Neben der Messung des Abstandes ist es mit der erfindungsgemäßen Korrekturvorrichtung aber auch problemlos möglich, den Winkel zwischen einem Punkt auf der Spindel oder von einem mit der Spindel verbundenen Element und zwei Referenzpunkten zu ermitteln, wodurch sich ein entsprechendes Winkelmaß ergibt.

Gemäß der Erfindung ist es möglich, daß die Referenzpunkte im Arbeitsraum der Spindel und/oder im Rückraum der Spindel angeordnet sind. Dementsprechend ist vorgesehen, daß die Korrekturvorrichtung im Arbeitsraum oder im Rückraum der Spindel wirkt. Für den Fall, daß sie im Arbeitsraum vorgesehen ist, wird zum Beispiel die relative Lage der Spindel zum Werkstück bestimmt und entsprechend durch die Korrekturvorrichtung beeinflußt. Es ist aber auch möglich, daß die Korrekturvorrichtung im Rückraum der Spindel angeordnet ist und rückseitig die entsprechenden Korrekturen ermittelt und durchführt. Die Anordnung im Rückraum hat den Vorteil, daß hier insbesondere zum Beispiel optische Messungen nicht durch Späne oder spritzende Kühlflüssigkeit beeinträchtigt wird. Hier entgegen bietet der Einsatz der Korrekturvorrichtung im Arbeitsraum den Vorteil, daß insbesondere die relative Lage der Arbeitsspindel zum Werkstück bestimmbar ist.

Für die Anordnung des Referenzpunktes gibt es ebenfalls mehrere Varianten. Es ist zum Beispiel vorgesehen, daß der Referenzpunkt am Gestell der Werkzeugmaschine oder an einem von der Werkzeugmaschine unabhängigen Element, zum Beispiel einer Wand oder dergleichen, angeordnet ist. Günstigerweise wird dabei eine Positionierung des Referenzpunktes gewählt, welche diesen in seiner Lage möglichst genau fixiert.

Alternativ dazu ist es möglich, daß ein verfahrbarer Referenzpunkt vorgesehen wird. Zum Beispiel wird der Referenzpunkt auf dem Schlitten vorgesehen, welcher über die Stange die Spindel hält. In entsprechenden Justierpositionen wird der Abstand der Spindel zum Referenzpunkt gemessen und der gemessene Ist-Wert mit dem jeweiligen Sollwert verglichen. Günstigerweise werden dabei mehrere Schlitten mit entsprechenden Referenzpunkten ausgestattet und so durch eine Triangulation die jeweilige Lage bestimmt.

Wie bereits erwähnt, wird unter einer optisch wirkenden Meßanordnung nicht nur der optisch sichtbare Spektralbereich verstanden, sondern es erschließt sich das gesamte elektromagnetische Spektrum. Dabei ist vorgesehen, zum Beispiel einen optischen Sender und Empfänger einzusetzen, deren Abstand bestimmt wird. Es ist aber auch möglich, den optischen Sender und Empfänger am gleichen Ort vorzusehen und einen Reflektor einzusetzen, der von dem vom Sender ausgegebenen Licht einen Teil zurückreflektiert, welcher von dem Empfänger dann aufgenommen wird. Dabei muß der Empfänger nicht exakt am gleichen Ort angesiedelt sein wie der Sender. In einer weiteren erfindungsgemäßen Variante ist es möglich, den Empfänger an einem dritten Ort anzuordnen.

In einer bevorzugten Ausgestaltung der Erfindung ist vorgesehen, daß die Korrekturvorrichtung einen beziehungsweise mehrere Meßstrecken und eine Referenzstrecke umfaßt, die Korrekturvorrichtung insbesondere eine Infrarotbreitbandlichtquelle oder einen aufgeweiteten Laserstrahl umfaßt und die an der Meßstrecke und an der Referenzstrecke reflektierten Anteile zu einem auswertbaren Interferenzsignal überlagert werden. Durch eine solche erfindungsgemäße Variante wird auch ein hochauflösendes Mittel zur Positionsfeststellung zur Verfügung gestellt. Dies ist insbesondere bei hochgenauen Bearbeitungsmaschinen, wie bei den erfindungsgemäßen Werkzeugmaschinen oder auch Bearbeitungszentren oder dergleichen von Vorteil, wo es auf eine hohe, µ-genaue Positionierung ankommt. Der Vorteil des Einsatzes einer Infrarotbreitbandlichtquelle liegt in der geringen Störanfälligkeit aufgrund von Umgebungslicht. Der Einsatz eines Laserstrahls beziehungsweise eines aufgeweiteten Laserstrahls ist ebenfalls von Vorteil, wenn auf entsprechende Lasermeßverfahren zurückgegriffen wird und ein aufgeweiteter Laserstrahl auch eine gewisse Toleranz im Raum erlaubt.

Neben einer Korrektur der Lage der Spindel wird erfindungsgemäß auch vorgeschlagen, daß die Korrekturvorrichtung die Lage der Spindelachse bestimmt und gegebenenfalls einstellt. Durch diese erfindungsgemäße Variante werden zum Beispiel auch geschwächte Lager oder andere Defekte korrigiert, die ansonsten zu einem Verkippen der Achse führen könnten und auch so eine Quelle von Maßungenauigkeiten bilden könnten.

Das erfindungsgemäße Konzept ist dabei auch auf Werkzeugmaschinen einsetzbar, bei welchen mehrere Spindeln von einer Halteplatte getragen sind und die Halteplatte über Stangen mit auf Führungsbahnen beweg- und positionierbaren Schlitten gelagert ist. Es hat sich ergeben, daß mehrspindelige Werkzeugmaschinen eine entsprechend höhere Effizienz aufweisen, insbesondere dann, wenn die Abmessung der Werkzeugmaschine so gewählt ist, daß mit zwei parallel geführten Werkzeugspindeln gleichartige Bearbeitungsschritte an den gleichen oder unterschiedlichen Werkstücken simultan, also gleichzeitig ausgeführt werden können.

In diesem Fall ist es des weiteren günstig, wenn die Korrekturvorrichtung die Lage der Halteplatte, welche zwei oder mehrere Spindeln dreht, bestimmt und gegebenenfalls korrigiert und zumindest eine Spindel bezüglich der Lage der anderen Spindel durch ein Korrekturglied, insbesondere ein Piezokristall oder ähnliches, in seiner Lage veränderlich ist. Durch diese erfindungsgemäße Variante wird es möglich, gegebenenfalls auftretende Fehler in der Ausrichtung der beiden Spindeln zu korrigieren. Entsprechende Fehler können in einem parallelen Versatz oder aber auch in einem Verkippen der jeweiligen Achsen zueinander liegen, die jeweils zu Maßungenauigkeiten führen. Günstigerweise ist dabei vorgesehen, daß jede Werkzeugspindel bezüglich ihrer Position und auch Achslage entsprechend vermessen und von der Korrekturvorrichtung kontrolliert und gegebenenfalls korrigiert wird.

Günstigerweise wird als Korrekturglied ein Piezokristall oder ähnliches eingesetzt, wobei der Einsatz eines Piezokristalls günstig ist, da es ein stufenlos wirkendes Mittel zur Verfügung stellt, um entsprechend geringe Maßkorrekturen durchzuführen.

Die Erfindung betrifft auch ein Verfahren zur Justage der Position einer Werkzeugspindel. Die Werkzeugspindel beziehungsweise Spindel ist dabei wie beschrieben über Stangen auf verschiebbaren Schlitten gelagert. Die erfindungsgemäße Aufgabe wird auch durch nachfolgenden Verfahrensvorschlag gelöst. Die Korrekturvorrichtung ermittelt die tatsächliche Position der Spindel, und die tatsächliche Position wird dann von der Steuerung und/oder der Korrekturvorrichtung mit der gewünschten Position verglichen und entsprechend der Positionsabweichung die Lage der Schlitten verändert, um die tatsächliche Position der gewünschten Position anzunähern und/oder gleichzusetzen.

Der erfindungsgemäße Vorschlag dient dabei nicht nur dazu, die mögliche Positionsänderung aufgrund der Wärmeausdehnung der die Werkzeugmaschine bildenden Komponenten zu kompensieren, sondern kann in gleicher Weise natürlich auch dazu eingesetzt werden, andere die exakte Positionierung beeinträchtigende Umstände zu eliminieren. Hierzu zählt zum Beispiel ein Spiel in den Gelenken, Verschleiß oder Fertigungstoleranzen beim Herstellen der Maschine, oder Durchbiegungen und dergleichen.

Gemäß dem erfindungsgemäßen Verfahren beziehungsweise der erfindungsgemäßen Werkzeugmaschine ist es dabei nicht notwendig, zwei getrennte Steuerungen vorzusehen. Die Regelung der Lage der Schlitten kann dabei von der Korrekturvorrichtung in gleicher Weise erbracht werden oder aber die Korrekturvorrichtung übergibt entsprechende Steuerwerte an die Steuerung der Schlitten, die dann entsprechend positioniert werden. Daher können verschiedene Konzepte verfolgt werden. Zum einen ist es möglich, diese Justage andauernd parallel mitlaufen zu lassen, oder aber die Justage der Position der Werkzeugspindel in einer Bearbeitungspause, zum Beispiel beim Wechsel des Werkstückes, vorzusehen.

In einer weiteren erfindungsgemäßen Variante ist vorgesehen, daß die Justage der Position zum Beispiel in Werkzeugwechselpausen in Justierpositionen erfolgt, in welche die Schlitten verfahren werden. Während der Werkzeugwechselpausen können diese Justier- und Korrekturmaßnahmen durchgeführt werden, ohne die Taktzeiten oder die übrigen Bearbeitungszeiten zu verlängern.

In einer bevorzugten Ausgestaltung der Erfindung ist vorgesehen, daß die Justage als Normierschritt vor dem eigentlichen Einsatz der Werkzeugmaschine erfolgt und die Korrekturvorrichtung entsprechende Korrekturdaten erzeugt, die in der Steuerung als Korrekturinformation für die jeweilige Positionierung der Spindel hinterlegt werden. Diese erfindungsgemäße Vorgehensweise erlaubt es, eine gegebenenfalls sehr aufwendige und auch hochwertige Korrekturvorrichtung einzusetzen, die in einem Normierschritt verwendet wird, um entsprechende Maßtoleranzen, also Korrekturdaten, zu ermitteln und der jeweiligen Maschinensteuerung als Korrekturinformation zur Verfügung zu stellen. Hierbei kann zum Beispiel die Spindel an eine Vielzahl von Positionen gefahren und so entsprechende Ist-Werte erzeugt werden, die mit den Soll-Werten, die die Steuerung vorgibt, verglichen werden. Die Differenz der Soll- und Ist-Werte ergeben dann jeweils bezogen auf die Position der Spindel eine Korrekturinformation, die dann beim eigentlichen Einsatz der Werkzeugmaschine entsprechend abgerufen werden. Hierbei ist es möglich, entweder eine kontinuierliche Korrekturfunktion zu erzeugen oder aber aus der Vielzahl von Korrekturinformationen, die aus einem Wertepaar, die Position der Spindel einerseits und Korrekturdaten andererseits, bestehen die Zwischenwerte der Spindelposition durch eine Interpolation zu erzeugen.

Es bietet sich dabei an, daß die Korrekturvorrichtung nach Durchführung des Normierschrittes aus der Werkzeugmaschine entfernt wird. Alternativ ist es natürlich möglich, eine Korrekturvorrichtung in der Maschine zu belassen, zum Beispiel um eine kontinuierliche Korrektur beziehungsweise Justage vornehmen zu können. Es ist aber auch möglich, die Korrekturvorrichtung zum Beispiel für Wartungszwecke wieder einzubauen und die Maschine von neuem zu vermessen.

Der erfindungsgemäße Vorschlag stellt zuverlässig sicher, daß nicht nur notwendige Korrekturen aufgrund des Einsatzes der Maschine (zum Beispiel erhöhte Temperaturen, Verschleiß und so weiter) korrigierbar sind, sondern erlauben auch ein Eliminieren von Montagefehlern und dergleichen.

Im Ergebnis wird daraus eine auf lange Zeit genau arbeitende und auch hohe Präzision liefernde Maschine erreicht.

In einer weiteren Ausgestaltung der Erfindung ist vorgeschlagen, daß die Werkzeugmaschine und/oder die Korrekturvorrichtung mindestens einen Temperatursensor aufweist und in einem Normierschritt mit der Korrekturvorrichtung ein Satz von der Temperatur abhängiger Korrekturdaten bezüglich der jeweiligen Positionierungen der Spindel erzeugt wird.

Insbesondere bei hochgenauen Bearbeitungen ist der Temperatureinfluß auf die Positionierung der Spindel von Bedeutung. Die hochgenaue Korrekturvorrichtung wird dabei eingesetzt, um zum einen in Abhängigkeit der Position der Werkzeugspindel (wie oben geschildert) und andererseits zusätzlich in Abhängigkeit von verschiedenen Temperaturen entsprechende Korrekturdaten zu sammeln. Diese werden wiederum als Korrekturinformationen der Steuerung zur Verfügung gestellt. Es handelt sich hierbei zum Beispiel um eine Wertematrix, die einerseits von der Temperatur und andererseits von der Werkzeugposition abhängt. Die Korrekturdaten können dabei nur eine oder alle verschiedenen vermessenen Dimensionen betreffen. Eine solche Datenaufbereitung ist aber mit herkömmlichen Steuerungen (CNC oder computerüberwacht) problemlos möglich.

In diesem Fall ist es von Vorteil, daß die Korrekturvorrichtung ein oder mehrere Temperatursensoren aufweist. Die Temperatursensoren verbleiben hierbei in der Werkzeugmaschine oder aber sie bilden allein die Korrekturvorrichtung, da die eigentliche Meßanordnung der Korrekturvorrichtung nach einem entsprechenden Normierschritt aus der Maschine wieder ausgebaut werden und zum Beispiel für andere Normierungszwecke eingesetzt werden. Die eigentliche Korrekturinformation wird dann durch die Korrekturvorrichtung aufgrund der gemessenen Temperatur ermittelt und eingesetzt. Die Korrekturvorrichtung besitzt dabei eine entsprechende Wertetabelle, in welcher die Korrekturinformationen aufgrund des Normierschrittes ausgelesen werden oder aber gemäß der anderen Variante der Erfindung werden die Temperaturwerte von der Korrekturvorrichtung im Hinblick auf eine temperaturabhängige Längenänderung umgerechnet und so der Positionssteuerung der Spindel zur Verfügung gestellt.

Günstigerweise wird dabei im Normierschritt das Temperaturprofil aufgenommen, das bedeutet, die erfindungsgemäße Werkzeugmaschine wird in einer temperaturregelbaren Kammer entsprechend normiert.

Das erfindungsgemäße Verfahren sowie die Werkzeugmaschine werden anhand der weiteren Ansprüche sowie mit Hilfe der Zeichnungen weiter beschrieben. Es zeigen:
- Fig. 1, 2, 5: in einer schematischen Ansicht je verschieden mögliche Varianten der Erfindung;
- Fig. 3a: in einer schematischen Ansicht eine weitere Variante der Erfindung;
- Fig. 3b: eine Seitenansicht nach Fig. 3a;
- Fig. 4a: in einer Ansicht eine weitere Variante der Erfindung und
- Fig. 4b: ein Detail nach Fig. 4a.

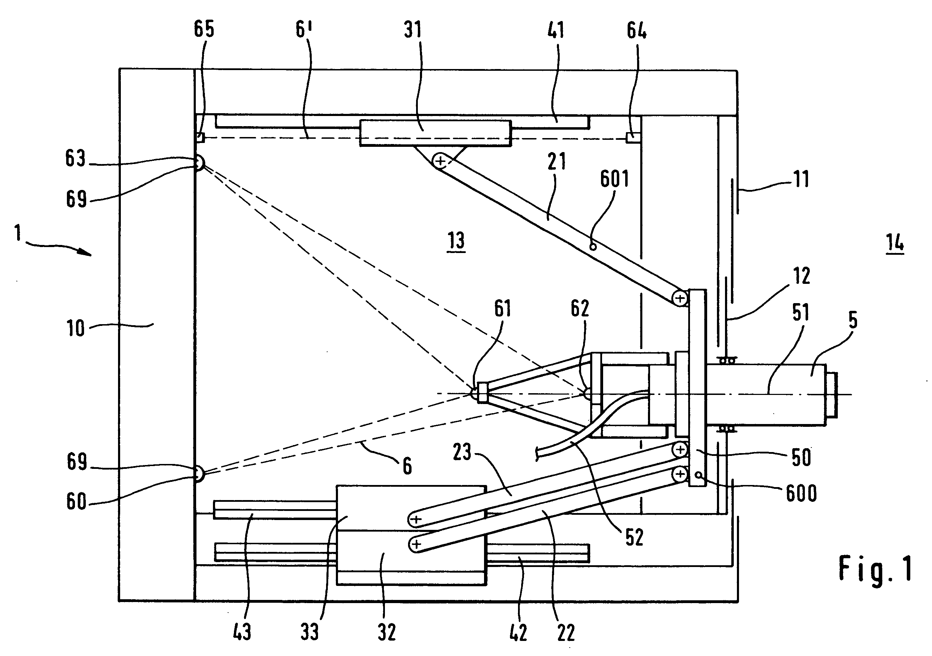

In Fig. 1 ist eine erfindungsgemäße Werkzeugmaschine 1 schematisch dargestellt. Die Werkzeugmaschine 1 besitzt ein Maschinengestell 10, in welchem die Spindel 5 gelagert ist. Die Werkzeugspindel 5 wirkt dabei in den Arbeitsraum 14, der durch die Schottwand 11 vom Rückraum 13 der Spindel 5 abgegrenzt ist. Die Schottwand 11 besteht aus zwei im wesentlichen parallel angeordneten Wänden, zwischen denen ein in der Spindel 5 befestigtes Wandteil 12 geführt ist. Durch eine entsprechende teleskopartige Anordnung der verschiedenen Wandteile 12 wird im Zusammenwirken mit der Schottwand 11 ein abgegrenzter Rückraum 13 von dem Arbeitsraum 14 erreicht.

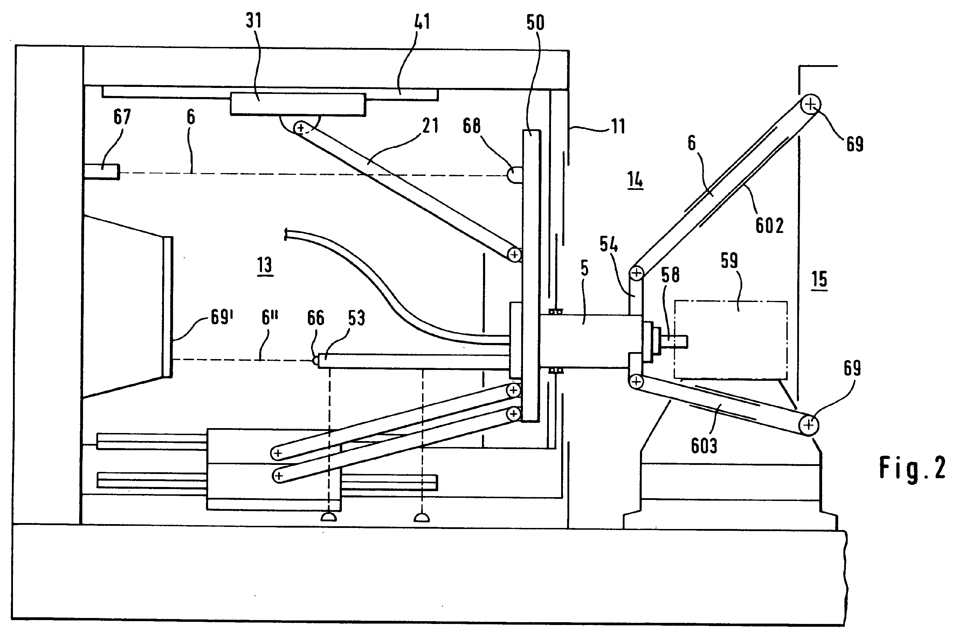

Im Arbeitsraum 14 befindet sich das Werkstück 59 (siehe Figur 2). Die Spindel 5 wirkt über ein Werkzeug 58 zu Bearbeitungszwecken auf das Werkstück 59 ein. In der Regel ist der Arbeitsraum 14 ebenfalls spritzwasserdicht gekapselt, da im Arbeitsraum auch Kühlflüssigkeit auf das Werkstück beziehungsweise Werkzeug gespritzt wird, um dieses zu kühlen beziehungsweise Späne abzutransportieren.

In dem Maschinengestell 10 sind für die verschiedenen Bewegungsachsen der Spindel 5 Führungsbahnen 41, 42 und 43 vorgesehen. Bei dem hier vorgestellten Konzept einer stabkinematischen Werkzeugmaschine werden die jeweiligen Lagerungen der Bewegungsachse nicht orthogonal zueinander aufeinander aufgebaut, sondern eigenständig getrennt über entsprechende Schlitten auf Führungsbahnen realisiert.

Bei dem hier vorgestellten Konzept werden sechs Stangen 21, 22, 23 vorgesehen, die die Halteplatte 50 der Spindel 5 gelenkig mit je einem Schlitten 31, 32 und 33 verbinden. Die Stangen 21, 22 und 23 sind dabei sowohl gelenkig an der Halteplatte 50 wie auch auf dem Schlitten 31, 32, 33 gelagert. Die Schlitten 31, 32, 33 bewegen sich linear auf einer Führungsbahn 41, 42, 43. Durch das Zusammenspielen der verschiedenen Bewegungen der Schlitten 31, 32, 33 auf ihren Führungsbahnen 41, 42, 43 ist es möglich, die Spindel 5 im Raum zu positionieren. Für ein Hochbewegen der Spindel 5 zum Beispiel wird der Schlitten 31 auf der Führungsbahn 41 nach links versetzt und gleichzeitig die beiden Schlitten 32 und 33 auf den Führungsbahnen 42 und 43 nach rechts bewegt. Im Ergebnis wird somit die Arbeitsspindel 5 nach oben bewegt.

Die Arbeitsspindel 5 wird von der Halteplatte 50 gehalten. Die Spindel 5 dient für einen Rotationsantrieb des Werkzeuges 58 um die Spindelachse 51. Für eine hochgenaue Bearbeitung der Werkstücke ist die Kenntnis der Lage der Spindelachse 51 und/oder der jeweiligen Bearbeitungsflächen des Werkzeuges 58 wichtig.

Des weiteren kann es in einer Variante der Erfindung auch wichtig sein, die relative Lage des Werkstücks 59 zur Spindel 5 beziehungsweise Werkzeug 58 durch die Korrekturvorrichtung zu korrigieren beziehungsweise zu beeinflussen.

Über die elektrische Zuleitung 52 wird der Rotationsantrieb der Spindel 5 mit Energie versorgt.

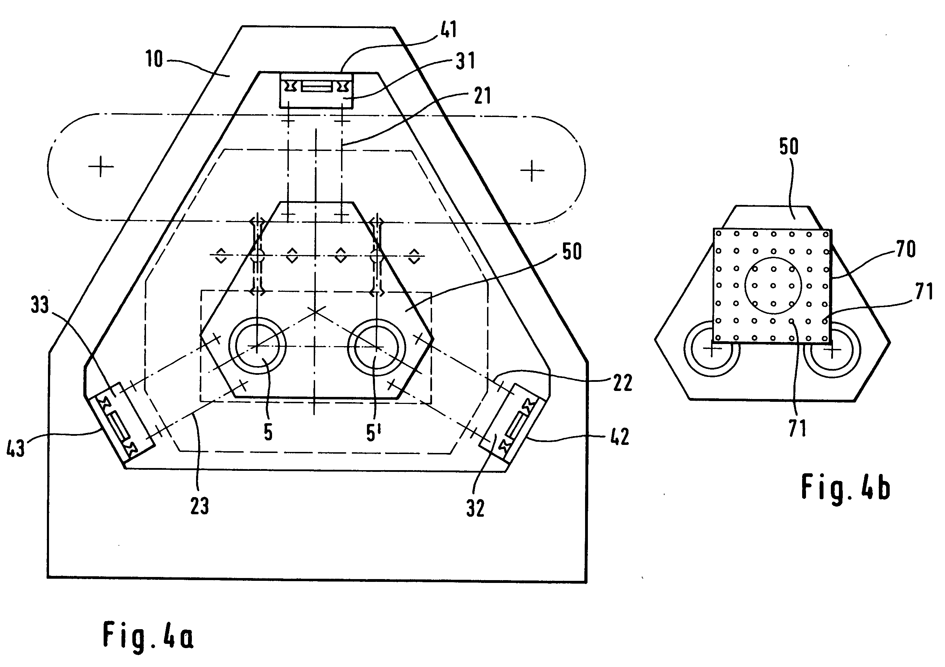

Bei den hier interessierenden stabkinematischen Werkzeugmaschinen 1 werden die Führungsbahnen 41, 42, 43 parallel verlaufend angeordnet, wobei deren Abstand ein gleichseitiges beziehungsweise gleichschenkliges Dreieck (zum Beispiel Fig. 4a) ergibt. Hierdurch werden die geometrischen Bedingungen für eine entsprechende Positionsbestimmung erleichtert. Günstigerweise werden in diesen Werkzeugmaschinen insgesamt sechs Stangen eingesetzt, durch welche die Spindel auf den jeweiligen Schlitten abgelagert ist. Die sechs Stangen teilen sich darauf in drei Stangenpaare, wobei ein Stangenpaar jeweils auf einem Schlitten gelagert ist.

Die Erfindung betrifft insbesondere die genaue Positionierung der Werkzeugspindel im Arbeitsraum 14. Erfindungsgemäß wird hierzu der Einsatz einer Korrekturvorrichtung 6 vorgeschlagen, welche die tatsächliche Position der Spindel 5 bezüglich eines oder mehrerer Referenzpunkte 69 bestimmt. In Fig. 1, 2 werden hierzu verschiedene Konzepte für die Korrekturvorrichtung 6 vorgeschlagen.

In Fig. 1 ist mit 600 ein Temperatursensor auf der Spindel beschrieben. Dadurch kann die temperaturbedingte Wärmedehnung der Spindel ermittelt werden. Entsprechender Rechenaufwand wird hierbei von der Korrekturvorrichtung und/oder der Maschinensteuerung geleistet. Die Positonsänderung kann in einer Variante auch aus empirisch gesammelten Daten einer Datenbank ermittelt werden. Das Ergebnis dieser Auswertung ist dann eine entsprechende tatsächliche Positionsangabe, die mit der geometrischen Position verglichen wird. In gleicher Weise ist es auch möglich, über dem auf der Stange 21 angeordneten Temperatursensor 601 ebenfalls entsprechende Schlüsse über die Wärmeausdehnung zu ziehen und daher ebenfalls entsprechende Maßungenauigkeiten über die Steuerung zu korrigieren.

Es ist durchaus auch möglich, als Korrekturvorrichtungen 6 eine optische, elektrische oder mechanische Meßanordnung zu wählen. Bei einer optischen Anordnung, zum Beispiel mit Hilfe eines Lasers 61, 62, wird Licht auf einen oder mehrere Empfänger 60, 63 gerichtet und über bekannte Abstandsmeßverfahren der jeweilige Abstand ermittelt. Dies kann hierbei zum Beispiel durch einen entsprechenden Lichtkegel erfolgen, wie dies in Fig. 1 angedeutet ist.

Es ist aber auch eine keglige Anordnung wie bei dem Vorschlag mit dem Sender möglich.

Eine optische Meßanordnung benötigt hierbei einen Sender und einen Empfänger. In Fig. 1 ist eine erfindungsgemäße Variante gezeigt, bei welcher die beiden Sender 61, 62 auf der Verlängerung der Spindelachse 51 angeordnet sind. Bei einer solchen Anordnung ist es möglich, die Lage der Spindelachse 51 unmittelbar zu bestimmen.

Die in Fig. 1 angedeuteten Korrekturvorrichtungen 6, 6' werden bevorzugt im Rückraum 13 eingesetzt, was den Vorteil bietet, daß diese im Arbeitsraum 14 nicht stören. Es entspricht aber auch dem erfinderischen Gedanken, daß die Korrekturvorrichtung 6 im Arbeitsraum 14 angeordnet ist. Dies ist zum Beispiel in Fig. 2 gezeigt, bei welchen im Arbeitsraum 14 an der Spindel 5 eine Positionsplatte 54 vorgesehen ist, an welcher sich drei teleskopierbare Träger 602, 603 (der dritte Träger ist verdeckt) an jeweiligen Referenzpunkten 69 gelenkig abstützen. Entsprechend dem Maß des Auszuges der Träger 602, 603 ist eine tatsächliche Positionsbestimmung möglich. Es kann zum Beispiel über mechanische oder andere (elektrische) Meßanordnungen erfolgen. Natürlich ist hier auch wiederum der Einsatz eines Lasermeßsystemes möglich. Bei einer entsprechenden Ausgestaltung (Dimensionierung) der Positionsplatte 54 stören auch die Träger 602, 603 bei der Bearbeitung des Werkstückes 59 nicht.

Die Erfindung erlaubt sowohl die Anordnungen der Referenzpunkte 69 im Rückraum 13 oder im Arbeitsraum 14 und schlägt gleichwohl vor, die Referenzpunkte 69 entweder an der Werkzeugmaschine 1, dem Maschinengestell 10 oder einer separaten, von der Werkzeugmaschine 1 unabhängigen Bezugswand 15 vorzusehen. Der Referenzpunkt 69 mag dabei gebildet sein durch einen entsprechenden Sender oder Empfänger der Meßanordnung. Dies hängt letztendlich von der Auswahl der verschiedenen Meßanordnungen, die erfindungsgemäß einsetzbar sind, ab, und beschränken die Erfindung in ihrem Einsatzbereich nicht. Die Bezugswand 15 ist dabei entweder im Arbeitsraum 14 oder im Rückraum 13 angeordnet.

In Fig. 2 sind im Rückraum 13 noch zwei weitere Korrekturvorrichtungen 6 beispielhaft gezeigt. Bei der ersten befindet sich auf der größer ausgebildeten Halteplatte 50 ein Empfänger 68, dessen Entfernung von dem Laser 67 ermittelt wird und so die Korrekturvorrichtung bildet. Analoges kann über das Spindelelement 53 erfolgen, wo der Abstand des endseitigen Bereiches des Spindelelementes 53 von einer Bezugsfläche 69' ermittelt wird. Dies ist die Korrekturvorrichtung 6''.

Die hier vorgestellten stabkinematischen Werkzeugmaschinen müssen dabei nicht zwingend parallel zueinander verlaufende Führungsbahnen 41 bis 43 aufweisen, dies können auch andere Anordnungen sein.

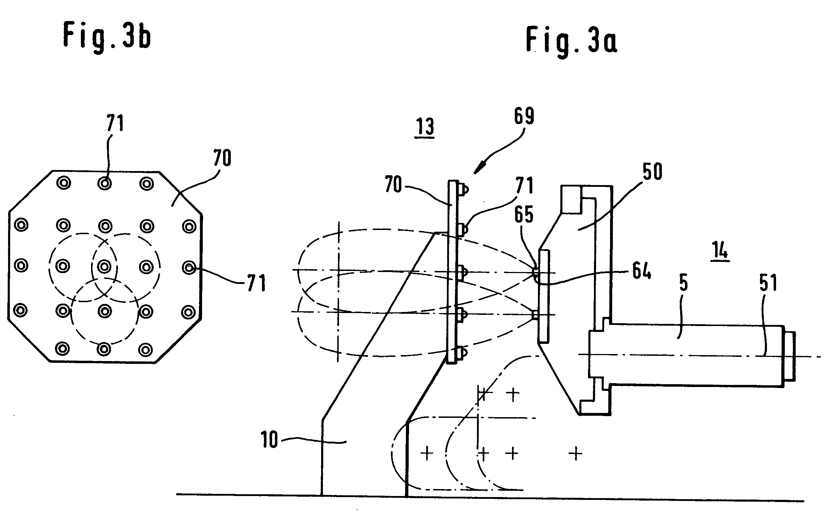

Erfindungsgemäß wird vorgeschlagen, daß eine Vielzahl von netzartig angeordneten Referenzpunkten 69 vorgesehen sind. Eine solche erfindungsgemäße Variante ist zum Beispiel in Fig. 3a gezeigt. Eine Mehrzahl von Reflektoren 71 sind an den Gitterpunkten eines Netzes auf der Platte 70 befestigt. Die Spindel 5 beziehungsweise die Halteplatte 50 der Spindel 5 trägt rückseitig mehrere Sender 65, die zum Beispiel ein breitbandiges Licht abstrahlen. Daneben ist ein Empfänger 64 angeordnet, der das von den Reflektoren 71 reflektierte Licht aufnehmen und mit entsprechenden, bekannten Abstandsverfahren zur Bestimmung des Abstandes der Spindel von der Platte 70 verrechnen.

In Fig. 3b ist in einer Draufsicht die ungefähre Anordnung der Platte 70 gezeigt. Es ergibt sich, daß in dem Abstrahlkegel des Senders 65 jeweils mehrere Reflektoren liegen, die entsprechend zur Lageermittlung der Spindel 5 beitragen. Diese können auch einander überlagern. Es ist auch möglich, daß insgesamt drei Sender 65 eingesetzt werden und so eine genaue Lagebestimmung im Raum möglich ist. Die Platte 70 wirkt dabei prinzipiell als Referenzpunkt, wenngleich eine Vielzahl von einzelnen Reflektoren 71 vorgesehen sind, die ihrerseits jeweils als Referenzpunkte wirken, da jeweils der Abstand zu den jeweils einzelnen Reflektoren 71 bestimmt wird.

Die Fig. 4a zeigt eine im Prinzip gleichschenklige Anordnung der Führungsbahnen 41, 42, 43 zueinander in dem Maschinengestell 10.

Das in Fig. 3a dargestellte Prinzip wird beschrieben von einer Mehrzahl von bevorzugt als Reflektoren 71 ausgebildeten Referenzpunkten 69, die am Maschinengestell 10 ortsfest angeordnet sind. An der Spindel 5 beziehungsweise deren Tragplatte 50 ist ein optischer Sender 65 und ein optischer Empfänger 64 angeordnet, welcher das rückreflektierte Licht auswertet. Der Vorteil einer Vielzahl von netzartig angeordneten Reflektoren beziehungsweise Referenzpunkten liegt in einer sehr hohen Zuverlässigkeit der entsprechenden Positionsbestimmung. Da mehrere Reflektoren zur Verfügung stehen, kann die Positionsbestimmung durch Mehrfachmessungen überprüft und auch abgesichert werden. Auch die Störung eines Reflektors beeinträchtigt entsprechend der Auslegung des Meßalgorithmusses die zuverlässige Positionsbestimmung nicht. Aufgrund der exakten Positionsbestimmung erlaubt es die Korrekturvorrichtung die Spindel beziehungsweise Spindellage exakt einzustellen.

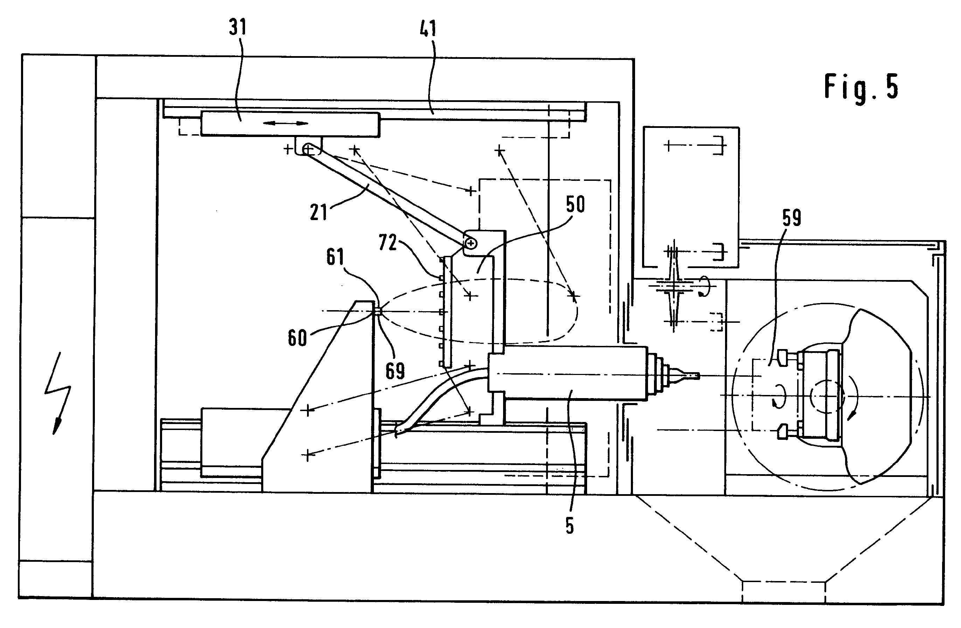

In Fig. 5 ist als Referenzpunkt 69 ein verfahrbarer oder stillstehender optischer Sender 61 vorgesehen und an der Spindel 5 beziehungsweise an deren Tragplatte 50 ist ein oder mehrere bevorzugt mehrzeilig angeordnete/r Reflektor/en 72 vorgesehen, wobei des weiteren ein optischer Empfänger 60 angeordnet ist, welcher das reflektierte Licht auswertet. In dem in Fig. 5 gezeigten Beispiel befindet sich der optische Empfänger 60 in der Nähe des optischen Senders 61 und zwar auf dem hier verfahrbar angedeuteten aber festlegbaren Schlitten. Das hier gezeigte Prinzip entspricht einer kinematischen Umkehr des in Fig. 3a, 3b gezeigten Prinzips. Hier werden die Referenzpunkte nicht gebildet von den Reflektoren, sondern von der im Prinzip festlegbaren Sender-Empfänger-Anordnung 60, 61. Die das Licht reflektierenden Reflektoren 72 befinden sich auf der Rückseite der Spindel 5 und fahren mit dieser mit.

Die jetzt mit der Anmeldung und später eingereichten Ansprüche sind Versuche zur Formulierung ohne Präjudiz für die Erzielung weitergehenden Schutzes.

Sollte sich hier bei näherer Prüfung, insbesondere auch des einschlägigen Standes der Technik, ergeben, daß das eine oder andere Merkmal für das Ziel der Erfindung zwar günstig, nicht aber entscheidend wichtig ist, so wird selbstverständlich schon jetzt eine Formulierung angestrebt, die ein solches Merkmal, insbesondere im Hauptanspruch, nicht mehr aufweist.

Die in den abhängigen Ansprüchen angeführten Rückbeziehungen weisen auf die weitere Ausbildung des Gegenstandes des Hauptanspruches durch die Merkmale des jeweiligen Unteranspruches hin. Jedoch sind diese nicht als ein Verzicht auf die Erzielung eines selbständigen, gegenständlichen Schutzes für die Merkmale der rückbezogenen Unteransprüche zu verstehen.

Merkmale, die bislang nur in der Beschreibung offenbart wurden, können im Laufe des Verfahrens als von erfindungswesentlicher Bedeutung, zum Beispiel zur Abgrenzung vom Stand der Technik, beansprucht werden.

Merkmale, die nur in der Beschreibung offenbart wurden, oder auch Einzelmerkmale aus Ansprüchen, die eine Mehrzahl von Merkmalen umfassen, können jederzeit zur Abgrenzung vom Stande der Technik in den ersten Anspruch übernommen werden, und zwar auch dann, wenn solche Merkmale im Zusammenhang mit anderen Merkmalen erwähnt wurden beziehungsweise im Zusammenhang mit anderen Merkmalen besonders günstige Ergebnisse erreichen.

## Patentansprüche

1. Werkzeugmaschine mit mindestens einer im Raum positionierbaren Spindel (5), wobei die Spindel insbesondere über Stangen (21, 22, 23) auf verschiebbaren Schlitten (31, 32, 33) gelagert ist, und die Verschiebung der Schlitten (31, 32, 33) zu einer Positionierung der Spindel (5) im Raum führt, **dadurch gekennzeichnet, daß** eine Korrekturvorrichtung (6) vorgesehen ist, welche die tatsächliche Position der Spindel (5) bezüglich eines oder mehrerer Referenzpunkte oder bezüglich des Werkstückes (59) bestimmt.

2. Werkzeugmaschine nach Anspruch 1, **dadurch gekennzeichnet, daß** die tatsächliche Position der Spindel (5) beziehungsweise des Werkstückes (59) mit der gewünschten Position von der Korrekturvorrichtung (6) und/oder einer Steuerung verglichen wird und dann auf die Lage des/der Schlitten/s (31, 32, 33) beziehungsweise derart eingewirkt wird, daß die gewünschte Position erreicht wird.

3. Werkzeugmaschine nach einem oder beiden der vorhergehenden Ansprüche, **dadurch gekennzeichnet, daß** die Korrekturvorrichtung (6) die Position der Spindel (5) und/oder die Position des Werkstückes (59) und somit auch gegebenenfalls die relative Lage der Spindel (5) beziehungsweise das von der Spindel (5) getragene Werkzeug (58) zum Werkstück (59) bestimmt.

4. Werkzeugmaschine nach einem oder mehreren der vorhergehenden Ansprüche, **dadurch gekennzeichnet, daß** die Korrekturvorrichtung (6) einen oder mehrere Temperatursensoren aufweist, und die Korrekturvorrichtung (6) die temperaturbedingten Längenänderungen der Stange (21, 22, 23) und/oder der Spindel (5) bezüglich eines Referenzpunktes ermittelt.

5. Werkzeugmaschine nach einem oder mehreren der vorhergehenden Ansprüche, **dadurch gekennzeichnet, daß** die Korrekturvorrichtung (6) eine optische oder mit elektromagnetischen Wellen arbeitende Meßanordnung aufweist.

6. Werkzeugmaschine nach einem oder mehreren der vorhergehenden Ansprüche, **dadurch gekennzeichnet, daß** die Korrekturvorrichtung (6) eine elektrische oder mechanische Meßanordnung aufweist.

7. Werkzeugmaschine nach einem oder mehreren der vorhergehenden Ansprüche, **dadurch gekennzeichnet, daß** die Korrekturvorrichtung (6) eine oder mehrere Laser aufweist.

8. Werkzeugmaschine nach einem oder mehreren der vorhergehenden Ansprüche, **dadurch gekennzeichnet, daß** die Korrekturvorrichtung (6) den Abstand der Spindel (5) oder ein mit der Spindel verbundenes Element, insbesondere den Schlitten (31, 32, 33) oder die Tragplatte der Spindel, zu einem Referenzpunkt bestimmt.

9. Werkzeugmaschine nach einem oder mehreren der vorhergehenden Ansprüche, **dadurch gekennzeichnet, daß** die Korrekturvorrichtung (6) den Winkel zwischen einem Punkt auf der Spindel (5) oder auf einem mit der Spindel verbundenen Element oder zwei Referenzpunkten ermittelt.

10. Werkzeugmaschine nach einem oder mehreren der vorhergehenden Ansprüche, **dadurch gekennzeichnet, daß** der beziehungsweise die Referenzpunkte im Arbeitsraum der Spindel (5) und/oder im Rückraum der Spindel (5) angeordnet sind.

11. Werkzeugmaschine nach einem oder mehreren der vorhergehenden Ansprüche, **dadurch gekennzeichnet, daß** der Referenzpunkt am Gestell (10) der Werkzeugmaschine (1) angeordnet ist oder ein von der Werkzeugmaschine (1) unabhängiges Element, zum Beispiel eine Wand oder dergleichen, den Referenzpunkt trägt.

12. Werkzeugmaschine nach einem oder mehreren der vorhergehenden Ansprüche, **gekennzeichnet durch** einen verfahrbaren Referenzpunkt.

13. Werkzeugmaschine nach einem oder mehreren der vorhergehenden Ansprüche, **dadurch gekennzeichnet, daß** der Referenzpunkt gebildet ist von einem optischen Sender oder Empfänger oder einem Reflektor.

14. Werkzeugmaschine nach einem oder mehreren der vorhergehenden Ansprüche, **dadurch gekennzeichnet, daß** die Korrekturvorrichtung (6) eine Sender-Empfänger-Anordnung aufweist.

15. Werkzeugmaschine nach einem oder mehreren der vorhergehenden Ansprüche, **dadurch gekennzeichnet, daß** eine Vielzahl von netzartig angeordneten Referenzpunkten vorgesehen sind.

16. Werkzeugmaschine nach einem oder mehreren der vorhergehenden Ansprüche, **dadurch gekennzeichnet, daß** die Korrekturvorrichtung (6) einen beziehungsweise mehrere Meßstrecken und eine Referenzstrecke umfaßt, die Korrekturvorrichtung (6) insbesondere eine Infrarotbreitbandlichtquelle oder einen aufgeweiteten Laserstrahl umfaßt und die an der Meßstrecke und an der Referenzstrecke reflektierten Anteile zu einem auswertbaren Interferenzsignal überlagert werden.

17. Werkzeugmaschine nach einem oder mehreren der vorhergehenden Ansprüche, **dadurch gekennzeichnet, daß** die Korrekturvorrichtung (6) die Lage der Spindelachse bestimmt und gegebenenfalls einstellt.

18. Werkzeugmaschine nach einem oder mehreren der vorhergehenden Ansprüche, **dadurch gekennzeichnet, daß** an der Spindel (5) oder an dem Referenzpunkt Empfänger der optischen Meßanordnung vorgesehen sind.

19. Werkzeugmaschine nach einem oder mehreren der vorhergehenden Ansprüche, **dadurch gekennzeichnet, daß** die Korrekturvorrichtung (6) im Arbeitsraum (14) angeordnet ist.

20. Werkzeugmaschine nach einem oder mehreren der vorhergehenden Ansprüche, **dadurch gekennzeichnet, daß** die Korrekturvorrichtung (6) im Rückraum (13) der Spindel (5) angeordnet ist.

21. Werkzeugmaschine nach einem oder mehreren der vorhergehenden Ansprüche, **dadurch gekennzeichnet, daß** eine oder mehrere Spindeln (5, 5') von einer Halteplatte (50) gehalten ist/sind, und die Halteplatte über Stangen (21, 22, 23) mit auf Führungsbahnen (41, 42, 43) beweg- und positionierbaren Schlitten (31, 32, 33) gelagert ist.

22. Werkzeugmaschine nach einem oder mehreren der vorhergehenden Ansprüche, **dadurch gekennzeichnet, daß** ein erster Schlitten die Führungsbahn eines zweiten Schlittens trägt.

23. Werkzeugmaschine nach einem oder mehreren der vorhergehenden Ansprüche, **dadurch gekennzeichnet, daß** ein Schlitten (31, 32, 33) über zwei Stangen mit der Spindel (5) verbunden ist.

24. Werkzeugmaschine nach einem oder mehreren der vorhergehenden Ansprüche, **dadurch gekennzeichnet, daß** eine Halteplatte (50) zwei oder mehrere Spindeln (5, 5') trägt und die Korrekturvorrichtung (6) die Lage der Halteplatte (50) bestimmt und gegebenefalls korrigiert und zumindest eine Spindel (5) bezüglich der Lage der anderen Spindel (5') durch ein Korrekturglied, insbesondere einen PiezoKristall oder ähnliches, in seiner Lage veränderlich ist.

25. Werkzeugmaschine nach einem oder mehreren der vorhergehenden Ansprüche, **dadurch gekennzeichnet, daß** eine Mehrzahl von bevorzugt als Reflektoren (71) ausgebildeten Referenzpunkten (69) am Maschinengestell (10) ortsfest angeordnet sind, und an der Spindel (5) beziehungsweise der Tragplatte (50) der Spindel (5) ein optischer Sender (65) und ein optischer Empfänger (64) angeordnet ist, welcher das rückreflektierte Licht auswertet.

26. Werkzeugmaschine nach einem oder mehreren der vorhergehenden Ansprüche, **dadurch gekennzeichnet, daß** als Referenzpunkt (69) ein verfahrbarer oder stillstehender optischer Sender (61) vorgesehen und an der Spindel (5) beziehungsweise der Tragplatte (50) ein oder mehrere bevorzugt netzartig angeordnete Reflektoren (72) vorgesehen sind und ein optischer Empfänger (60) vorgesehen ist, welcher das rückreflektierende Licht auswertet.

27. Verfahren zur Justage der Position einer Werkzeugspindel (5) einer Werkzeugmaschine, wobei die Spindel (5) über Stangen (21, 22, 23) auf verschiebbaren Schlitten (31, 32, 33) gelagert ist und eine Steuerung die Lage der Schlitten und dadurch auch die Lage der Werkzeugspindel regelt, wobei eine Korrekturvorrichtung (6) vorgesehen ist, die die tatsächliche Position der Spindel (5) ermittelt, und die tatsächliche Position von der Steuerung mit der gewünschten Position der Spindel verglichen wird und entsprechend der Positionsabweichung die Lage der Schlitten (31, 32, 33) verändert wird, um die tatsächliche Position der gewünschten Position anzunähern und/oder gleichzusetzen.

28. Verfahren nach Anspruch 27, **dadurch gekennzeichnet, daß** die Justage der Position, zum Beispiel in Werkstückwechselpausen, in Justierpositionen, in welche die Schlitten (31, 32, 33) verfahren werden, erfolgt.

29. Verfahren nach einem oder beiden der vorhergehenden Ansprüche 27 und 28, **dadurch gekennzeichnet, daß** die Justage als Normierschritt vor dem eigentlichen Einsatz der Werkzeugmaschine erfolgt und die Korrekturvorrichtung entsprechende Korrekturdaten erzeugt, die in der Steuerung als Korrekturinformation für die jeweilige Positionierung der Spindel hinterlegt werden.

30. Verfahren nach einem oder mehreren der vorhergehenden Ansprüche 27 bis 29, **dadurch gekennzeichnet, daß** die Korrekturvorrichtung nach Durchführung des Normierschrittes aus der Werkzeugmaschine entfernt wird.

31. Verfahren nach einem oder mehreren der vorhergehenden Ansprüche 27 bis 30, **dadurch gekennzeichnet, daß** die Werkzeugmaschine und/oder die Korrekturvorrichtung mindestens einen Temperatursensor aufweist und in einem Normierschritt mit der Korrekturvorrichtung ein Satz von der Temperatur abhängiger Korrekturdaten bezüglich der jeweiligen Postionierung der Spindel erzeugt wird.

32. Verfahren nach einem oder mehreren der vorhergehenden Ansprüche 27 bis 31, **dadurch gekennzeichnet, daß** die Steuerung in Abhängigkeit der Temperatur die entsprechend hinterlegten Korrekturinformationen für die jeweilige Positionierung der Spindel auswählt.
